# EUROPEAN PATENT SPECIFICATION

(11) **EP 2 679 856 B1**
(45) Date of publication and mention of the grant of the patent: **01.01.2020**
(21) Application number: 12749106.6
(22) Date of filing: 23.02.2012
(51) Int. Cl.: F16F 9/08, B61F 5/10, F16F 9/32, F16F 15/04, B61F 5/02, F16F 13/00, F16F 9/05

(54) **AIR SPRING APPARATUS**
LUFTFEDERVORRICHTUNG
APPAREIL À RESSORT PNEUMATIQUE

(30) Priority: 25.02.2011 JP 2011040031
(43) Date of publication of application: 01.01.2014
(73) Proprietor: Bridgestone Corporation, Tokyo 104-8340 (JP)
(72) Inventor: ARAI Jun, Yokohama-shi, Kanagawa 244-8510 (JP)
(74) Representative: Oxley, Robin John George
(86) International application number: PCT/JP2012/054406
(87) International publication number: WO 2012/115183

(56) References cited:
- EP-A1- 2 251 562
- JP-A- 2003 294 073
- JP-A- 2006 329 280
- JP-A- 2007 118 663
- JP-A- 2008 302 845
- JP-A- 2009 079 705
- JP-A- 2011 021 680
- JP-U- 56 084 139

## Description

### [Technical Field]

The present invention relates to an air spring apparatus that is disposed, for example, between a body and a carriage of a railroad vehicle or the like. Priority is claimed on Japanese Patent Application No. 2011-040031, filed February 25, 2011, the content of which is incorporated herein by reference.

### [Background Art]

From the related art, as an air spring apparatus, for example, a configuration disclosed in Patent Document 1 described below has been known. The air spring apparatus includes a diaphragm that has an upper member, a lower member, and a cylindrical membrane member having both open end sections connected to both members and sealed therewith. Furthermore, a sliding surface is formed on a lower surface of the upper member. The lower member is equipped with a slide plate with which the sliding surface of the upper member comes into contact in an exhaust state in which the interior of the diaphragm is exhausted, and a support section that supports the slide plate from the lower side thereof. The slide plate is formed of a resin material so as to reduce a coefficient of friction between the slide plate and the sliding surface, and is fixed to the upper surface of the support section by bonding.

In the above-mentioned air spring apparatus, even in the exhaust state, the sliding surface and the slide plate slide in the mutual contact state. Accordingly, it is possible to relatively move the upper member and the lower member in a radial direction.

### [Citation List]

### [Patent Document]

[Patent Document 1] Japanese Unexamined Patent Application, First Publication No. 2010-127350

Reference is also made to EP-A-2251562, which discloses an air spring apparatus according to the preamble of Claim 1, and also to JP 2011-021680 and JP 2003-294073.

### [Summary of Invention]

### [Technical Problem]

However, in the above-mentioned air spring apparatus of the related art, there is a problem in that when the sliding surface and the slide plate slide in the mutual contact state, the slide plate tends to be detached and peeled off from the support section.

In addition, in order to suppress peeling of the slide plate from the support section, integrally forming the slide plate and the support section of the same resin material may be considered. However, in this case, compared to a case in which the support section is formed of a metallic material, strength becomes weak or creeping tends to occur, which may affect durability of the lower member.

An aspect of the present invention was made in view of the above-mentioned circumstances, and an object thereof is to provide an air spring apparatus which is capable of suppressing the contact section from being detached from the support section.

### [Solution to Problem]

In order to achieve the aforementioned objects, the present invention suggests the following means.

An air spring apparatus according to the present invention includes a diaphragm that has an upper member, a lower member, and a cylindrical membrane member having both open end sections connected to both the upper and lower members and sealed therewith, the upper member and the lower member being provided with contact sections that slidably come into contact with each other in an exhaust state in which the interior of the diaphragm is exhausted, wherein at least one of the upper member and the lower member having the contact sections, which are formed of a resin material, includes a support section that supports the contact section from the exterior of the diaphragm disposed in an axial line direction, and an engaging section that is provided in the contact section and controls respective relative movements of the contact section with respect to the support section in each of the axial line direction and the radial direction by being engaged with an engagement section that is provided in the support section.

According to the present invention, the engaging section is provided in the contact section that is supported by the support section. For this reason, the engaging section is engaged with the engagement section, which makes it possible to control each relative movement of the contact sections with respect to the support section in the axial line direction and the radial direction. Furthermore, it is possible to suppress the contact sections formed of a resin material supported by the support section from being detached from the support section when the contact sections slide in the mutual contact state.

By providing the engaging section in the contact section, it is possible to separately form the contact section and the support section while suppressing the contact section from being detached from the support section. Accordingly, for example, by forming the support section of a metallic material, durability of the lower member can be easily secured.

Furthermore, at least one contact section of the upper member and the lower member is formed of a resin material. Thus, for example, by adopting a material having a smaller coefficient of friction than a material that forms the support section as a resin material that forms the contact section, the coefficient of friction between the contact sections can be effectively reduced.

Furthermore, the engaging section may be integrally provided in the contact section of the same resin material as the contact section provided with the engaging section.

In this case, the engaging section is integrally formed with the contact section of the same resin material as the contact section provided with the engaging section. Accordingly, a connected body of the engaging section and the contact section can be integrally molded, for example, by injection molding or the like, and can be easily formed.

Moreover, the connected body can be integrally formed by the injection molding. Accordingly, when the connected body is molded, for example, by adopting insert molding in which the resin material is injected into a metal mold to mold the connector in a state in which the support section is disposed inside a metal mold, the engaging section can be engaged with the engagement section while forming the connected body. As a result, manufacturing work of the air spring apparatus can be simplified.

Moreover, when the connected body is molded by the insert molding as mentioned above, it is possible to bring the connected body into close contact with the support section. As a result, it is possible to effectively suppress the contact section from being detached from the support section.

Furthermore, the engagement section may be formed on an outer circumferential surface of the support section in a groove shape. Furthermore, the engaging section may include a cylindrical section that extends toward the exterior of the diaphragm disposed in the axial line direction from an outer circumferential edge of the contact section and is externally fitted to the support section, and a protrusion section that protrudes on an inner circumferential surface of the cylindrical section and is disposed in the engagement section.

In this case, since the cylindrical section of the engaging section is externally fitted to the support section, the relative movement in the radial direction between the contact section and the support section can be controlled by the contact between the inner circumferential surface of the cylindrical section and the outer circumferential surface of the support section.

Furthermore, since the protrusion section of the engaging section is disposed in the engagement section, the relative movement in the axial line direction between the contact section and the support section can be controlled by the contact between the protrusion section and the inner surface of the engagement section.

The cylindrical section extends toward the exterior of the diaphragm in the axial line direction from the outer circumferential edge of the contact section. For this reason, as described above, the relative movement in the axial line direction between the contact section and the support section is controlled by the contact between the protrusion section and the inner surface of the engagement section, which makes it possible to suppress an outer circumferential side portion including the outer circumferential edge in the contact section from bending backward toward the interior of the diaphragm in the axial line direction.

In addition, both contact sections repeatedly slide in the mutual contact state, and thus the outer circumferential side portion of the contact section formed of a resin material easily bends backward. For this reason, the above-mentioned working effects can be greatly increased.

### [Advantageous Effects of Invention]

According to the air spring apparatus related to the present invention, it is possible to suppress the contact section from being detached from the support section.

### [Brief Description of Drawings]

FIG. 1 is a longitudinal cross-sectional view of an air spring apparatus related to an embodiment of the present invention.
FIG. 2 is a top view of a plate-like base section that forms the air spring apparatus shown in FIG. 1.
FIG. 3 is a longitudinal cross-sectional view of an exhaust state in which the interior of the diaphragm is exhausted in the air spring apparatus shown in FIG. 1.

### [Description of Embodiments]

Hereinafter, an air spring apparatus related to an embodiment of the present invention will be described with reference to the drawings.

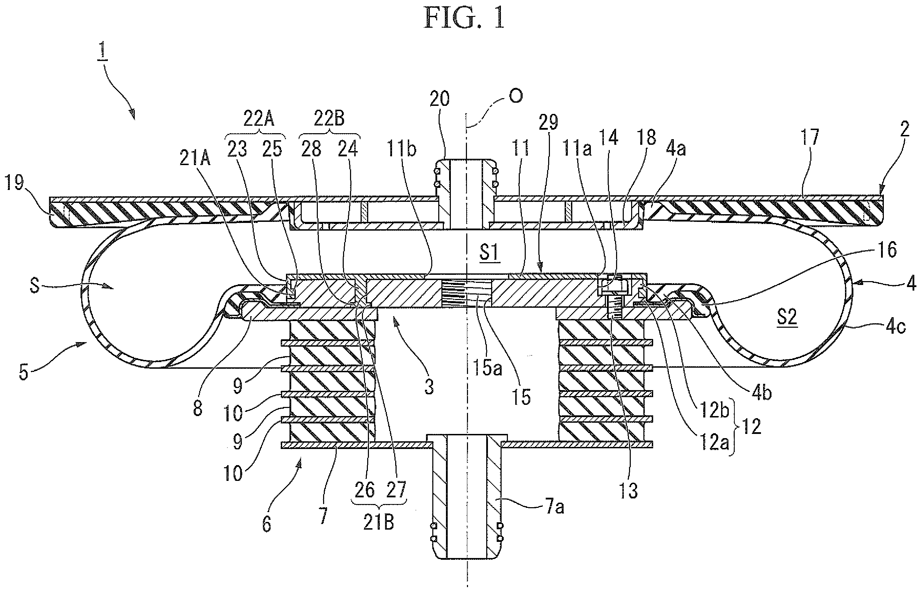

As shown in FIG. 1, an air spring apparatus 1 includes a diaphragm 5 that includes an upper surface plate (an upper member) 2, a lower surface plate (a lower member) 3, and a cylindrical membrane member 4 having open end sections 4a and 4b connected to the surface plates 2 and 3 and sealed therewith, and an intermediate portion 4c located between the open end sections 4a and 4b bulges toward the exterior in the radial direction, and an auxiliary elastic body 6 that is connected to the lower surface plate 3 of the diaphragm 5. The air spring apparatus 1 is provided, for example, between a body and a carriage (not shown) of a railroad vehicle or the like.

The auxiliary elastic body 6 is formed in a cylindrical shape, and respective central axial lines of the upper surface plate 2, the lower surface plate 3, the cylindrical membrane member 4, and the auxiliary elastic body 6 are located on a common axial line.

Hereinbelow, the common axis is assumed to be an axial line O, the upper surface plate 2 side along the axial line O is assumed to be an upper side, the lower surface plate 3 side is assumed to be a lower side, a direction perpendicular to the axial line O is assumed to be a radial direction, and a direction rotating around the axial line O is assumed to be a circumferential direction.

Spring constants of the auxiliary elastic body 6 in each of the axial line O direction and the radial direction are higher than those of the diaphragm 5 in which a gas such as air is filled. In the present embodiment, the auxiliary elastic body 6 is constituted by laminated rubber that includes an annular lower board 7, an annular upper board 8, and an annular rubber plate 9 and an annular metallic plate 10 that are alternately disposed in the axial line O direction between the boards 7 and 8. The lower board 7, the upper board 8, the rubber plate 9, and the metallic plate 10 are disposed coaxially with the axial line O. The lower board 7, the upper board 8, the metallic plate 10 and the rubber plate 9 are affixed by vulcanization.

Furthermore, in the present embodiment, among outer diameters of each member that constitutes the auxiliary elastic body 6, an outer diameter of the upper board 8 is the greatest, and the outer circumferential edge section of the upper board 8 protrudes outward in the radial direction.

Additionally, among inner diameters of each member that constitutes the auxiliary elastic body 6, the inner diameter of the lower board 7 is the smallest, and the inner circumferential edge section of the lower board 7 protrudes inward in the radial direction.

Moreover, a communication cylinder section 7a, the interior of which is opened toward both sides in the axial line O direction to communicate with the interior of the auxiliary elastic body 6, is fitted into the lower board 7. Air supplying member, an auxiliary tank or the like (not shown) for supplying and discharging the gas such as air into and from the diaphragm 5 is hermetically connected to a portion that protrudes downward from the lower board 7 in the communication cylinder section 7a.

The lower surface plate 3 of the diaphragm 5 includes a resin plate section (contact section) 11 formed of a resin material, and a support section 12 that supports the resin plate section 11 from the lower side (the exterior of the diaphragm disposed in the axial line direction). The resin plate section 11 and the support section 12 are disposed coaxially with the axial line O.

The support section 12 is formed of, for example, a metallic material or the like. In the present embodiment, the support section 12 is configured so that a large-diameter portion 12a and a small-diameter portion 12b disposed coaxially with the axial line O are connected to each other from the lower side (the exterior) in the axial line O direction in this sequence. An outer diameter of the large-diameter portion 12a of the support section 12 is smaller than an outer diameter of the upper board 8 of the auxiliary elastic body 6.

Furthermore, the support section 12 is fixed to the upper board 8 of the auxiliary elastic body 6 by a fixing bolt 13. Thus, the lower surface plate 3 and the auxiliary elastic body 6 are hermetically connected to each other, and the communication between the interior and the exterior of the auxiliary elastic body 6 through the gap between the lower surface plate 3 and the auxiliary elastic body 6 is blocked.

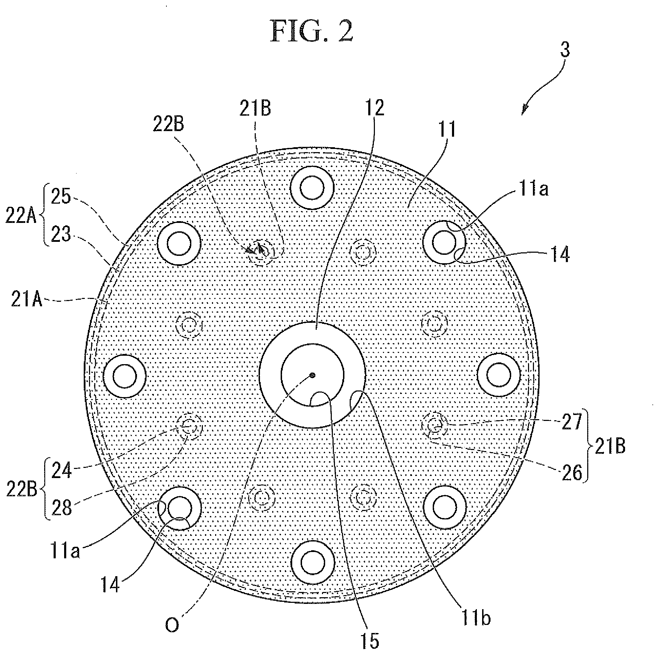

In addition, the support section 12 is formed with a plurality of bolt holes 14 through which the fixing bolts 13 are inserted. The bolt holes 14 penetrate the support section 12 in the axial line O direction, and are disposed at intervals in the circumferential direction in a plural number, as shown in FIG. 2. The plurality of bolt holes 14 are disposed at equal intervals in a circumferential direction on the same circle around the axial line O in the top view as viewed from the upper side in the axial line O direction.

Furthermore, as shown in FIG. 1, in the support section 12, a supplying and discharging hole 15 communicating the interior of the auxiliary elastic body 6 and the interior of the diaphragm 5 penetrates in the axial line O direction. The supplying and discharging hole 15 is disposed coaxially with the axial line O, and communicates with the interior of the communication cylinder section 7a through the interior of the auxiliary elastic body 6.

In addition, in the shown example, a female screw section 15a is formed in the supplying and discharging hole 15, and a hanging bolt included in a hanging device (not shown) for lifting the lower surface plate 3 upward can be screwed into the female screw section 15a.

In the upper board 8 of the auxiliary elastic body 6, an outer circumferential edge section located outside the support section 12 in the radial direction is covered by an annular rubber seat 16 from the upper side and the outer side in the radial direction. The inner circumferential edge of the rubber seat 16 is interposed between the support section 12 of the lower surface plate 3 and the upper board 8 of the auxiliary elastic body 6.

The lower surface of the resin plate section 11 comes into surface contact with the upper surface of the support section 12. Furthermore, the outer diameter of the resin plate section 11 is equal to the outer diameter of the large-diameter portion 12a of the support section 12. The resin plate section 11 is thinner than the support section 12 in the axial line O direction. Furthermore, in the resin plate section 11, at a position corresponding to the bolt hole 14 of the support section 12, an insertion hole 11a, which is coaxial with the bolt hole 14 and has the same shape and the same size as viewed from the upper surface, is formed. Furthermore, in the resin plate section 11, at a position corresponding to the supplying and discharging hole 15 of the support section 12, a communication hole 11b, which has a greater diameter than the supplying and discharging hole 15 and communicates with the supplying and discharging hole 15 and the interior of the diaphragm 5, is formed.

In addition, as the resin material for forming the resin plate section 11, it is preferable to use a material having a lower coefficient of friction than the material for forming the support section 12. As the resin material, for example, a thermoplastic resin, a thermosetting resin and the like are adopted, and preferably, polyethylene, polyacetal and the like are adopted.

The upper surface plate 2 includes a main body plate section 17 that has an outer diameter greater than that of the cylindrical membrane member 4, and a projecting section (contact section) 18 that projects downward (toward the interior of the diaphragm in the axial line direction) from a central section in the radial direction in the main body plate section 17. The main body plate section 17 and the projecting section 18 are disposed coaxially with the axial line O.

The projecting section 18 is formed in a closed-end cylindrical shape and faces the resin plate section 11 of the lower surface plate 3 in the axial line O direction. The outer diameter of the projecting section 18 is equal to the outer diameter of the resin plate section 11.

Furthermore, in the main body plate section 17, an outer circumferential side portion located outside the projecting section 18 in the radial direction is covered by an annular rubber membrane 19 from the lower side. A radial gap is provided between the projecting section 18 and the rubber membrane 19.

Additionally, the upper surface plate 2 is provided with a penetration cylinder section 20 which penetrates the main body plate section 17 and the projecting section 18 in the axial line O direction, and through which the interior and the exterior of the diaphragm 5 communicate with each other. A lower end surface of the penetration cylinder section 20 is coplanar with the lower surface of the projecting section 18. An upper end section of the penetration cylinder section 20 protrudes above the main body plate section 17. For example, the above-mentioned gas supplying member, auxiliary tank or the like is hermetically connected to the upper end section of the penetration cylinder section 20.

The cylindrical membrane member 4 has flexibility, and is formed of, for example, an elastic body material, preferably, a rubber material or the like. Furthermore, the upper open end section 4a of the open end sections 4a and 4b of the cylindrical membrane member 4 is hermetically and externally fitted to the projecting section 18 of the upper surface plate 2, and is disposed in a gap between the projecting section 18 and the rubber membrane 19. Furthermore, the lower open end section 4b of the open end sections 4a and 4b is hermetically and externally fitted to the support section 12 of the lower surface plate 3, and is disposed on the rubber seat 16.

Furthermore, the intermediate portion 4c of the cylindrical membrane member 4 protrudes outward from the upper board 8 of the auxiliary elastic body 6 in the radial direction. The intermediate portion 4c comes into contact with the upper board 8 of the auxiliary elastic body 6 from the upper side and the outer side in the radial direction via the rubber seat 16 provided on the lower surface plate 3 side. Furthermore, the intermediate portion 4c comes into contact with the main body plate section 17 of the upper surface plate 2 from the lower side via the rubber membrane 19 provided on the upper surface plate 2 side.

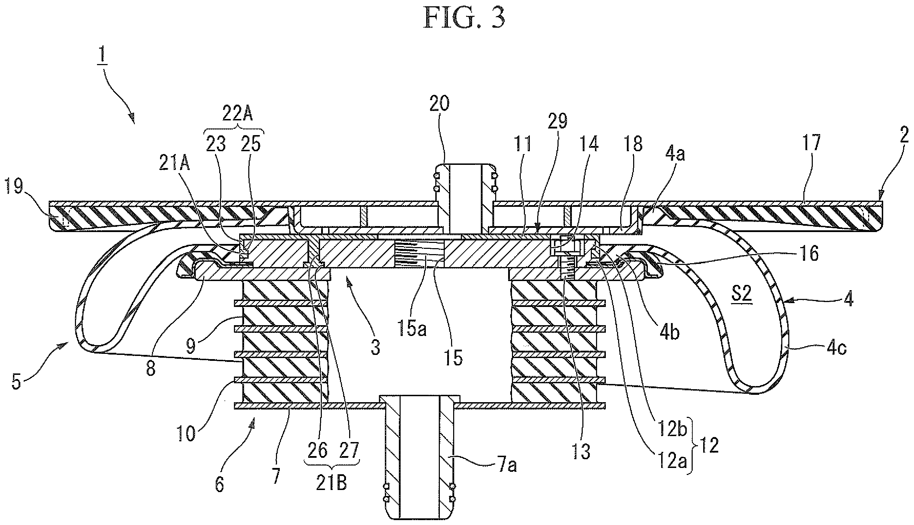

The projecting section 18 of the upper surface plate 2 and the resin plate section 11 of the lower surface plate 3 are separated from each other in the axial line O direction and face each other in a filled state in which the gas is filled in the diaphragm 5. As shown in FIG. 3, the projecting section 18 and the resin plate section 11 slidably come into contact with each other in the exhaust state in which the interior of the diaphragm 5 is exhausted.

In the present embodiment, as shown in FIG. 1, in the diaphragm 5 of the filled state, a diaphragm space S is formed to include a central space S1 located between the projecting section 18 of the upper surface plate 2 and the resin plate section 11 of the lower surface plate 3, and an outer circumferential space S2 which is located in the cylindrical membrane member 4, extends over the whole circumference, and is connected to the central space S1 from the outer side in the radial direction.

In the filled state, the interior of the penetration cylinder section 20 of the upper surface plate 2 side and the supplying and discharging hole 15 of the lower surface plate 3 side communicate with the outer circumferential space S2 in the cylindrical membrane member 4 through the central space S1 between the projecting section 18 of the upper surface plate 2 and the resin plate section 11 of the lower surface plate 3, respectively. In the filled state, for example, the gas is supplied to and discharged from the interior of the penetration cylinder section 20 or the interior of the diaphragm 5 through the supplying and discharging hole 15, thereby adjusting the pressure in the diaphragm 5.

Furthermore, when the gas is discharged from the interior of the diaphragm 5 in the filled state through the interior of the penetration cylinder section 20 or the supplying and discharging hole 15, the central space S1 and the outer circumferential space S2 are gradually reduced, respectively. Furthermore, the projecting section 18 of the upper surface plate 2 and the resin plate section 11 of the lower surface plate 3 gradually approach each other in the axial line O direction. Furthermore, the cylindrical membrane member 4 gradually undergoes shrinkage deformation. Moreover, as shown in FIG. 3, when entering the exhaust state, the projecting section 18 and the resin plate section 11 come into contact with each other, and the central space S1 disappears.

In the exhaust state, the projecting section 18 of the upper surface plate 2 and the resin plate section 11 of the lower surface plate 3 slide in the mutual contact state. Accordingly, the upper surface plate 2 and the lower surface plate 3 are able to relatively move in the radial direction.

Moreover, in the present embodiment, the resin plate section 11 is provided with engaging sections 22A and 22B that control each relative movement in the axial line O direction and the radial direction of the resin plate section 11 with respect to the support section 12 by being engaged with engagement sections 21A and 21B provided on the support section 12.

In the shown example, as the engaging sections 22A and 22B and the engagement sections 21A and 21B, a first engaging section 22A having a cylindrical section 23 that extends downward (the exterior of the diaphragm in the axial line direction) from the outer circumferential edge of the resin plate section 11 and is externally fitted to the support section 12, and a first engagement section 21A engaged with the first engaging section 22A are included. Furthermore, a second engaging section 22B having a columnar section 24 that extends downward from a portion located inside the outer circumferential edge of the resin plate section 11, and a second engagement section 21B engaged with the second engaging section 22B are included.

The first engagement section 21A is formed on the outer circumferential surface of the support section 12 in a groove shape. In the present embodiment, the first engagement section 21A extends in the small-diameter portion 12b of the support section 12 over the whole circumference in the circumferential direction. The shape of the first engagement section 21A as viewed in the longitudinal cross-section along the axial line O is a rectangular shape having side portions that extend in the axial line O direction and the radial direction.

The cylindrical section 23 of the first engaging section 22A is externally fitted to the small-diameter portion 12b of the support section 12. The outer circumferential surface of the cylindrical section 23 is coplanar with the outer circumferential surface of the large-diameter portion 12a of the support section 12. Furthermore, the cylindrical section 23 is interposed between the small-diameter portion 12b of the support section 12 and the lower open end section 4b of the cylindrical membrane member 4.

On an inner circumferential surface of the cylindrical section 23, a protrusion section 25 disposed in the first engagement section 21A protrudes inward in the radial direction. The protrusion section 25 is formed in an annular shape extending over the whole circumference in the circumferential direction, and the protrusion section 25 and the first engagement section 21 A have the same shape and the same size.

According to the first engaging section 22A and the first engagement section 21A described above, the cylindrical section 23 of the first engaging section 22A is externally fitted to the support section 12. For this reason, it is possible to control the relative movement between the resin plate section 11 and the support section 12 in the radial direction by the contact between the inner circumferential surface of the cylindrical section 23 and the outer circumferential surface of the support section 12.

Furthermore, the protrusion section 25 of the first engaging section 22A is disposed in the first engagement section 21A. For this reason, it is possible to control the relative movement between the resin plate section 11 and the support section 12 in the axial line O direction by the contact between the protrusion section 25 and the inner surface of the first engagement section 21A.

The second engagement section 21B includes a through hole 26 that penetrates through the support section 12 in the axial line O direction, and an engaging concave section 27 that is formed on an inner circumferential surface of the through hole 26.

As shown in FIG. 2, a plurality of through holes 26 are disposed inside the bolt hole 14 in the support section 12 in the radial direction at intervals in the circumferential direction. The plurality of through holes 26 are disposed on the same circle around the axial line O at equal intervals in the circumferential direction, when viewed from the upper surface.

Furthermore, the engaging concave section 27 is formed on the inner circumferential surface of the through holes 26 over the whole circumference in a groove shape, and opens toward the lower surface of the support section 12 as shown in FIG. 1. The shape of the engaging concave section 27 as viewed in the longitudinal cross-section is a rectangular shape having each side section that extends in the axial line O direction and the radial direction.

A plurality of columnar sections 24 of the second engaging section 22B are disposed in the circumferential direction at intervals, and are inserted into each through hole 26. The through holes 26 and the columnar sections 24 inserted into the through holes 26 have the same shape and the same size.

Each of the columnar sections 24 is provided with an engaging convex section 28 that is disposed in the engaging concave section 27 of the second engagement section 21B. The engaging convex section 28 is formed in an annular shape extending on the outer circumferential surface of the columnar section 24 over the whole circumference. Furthermore, the engaging convex section 28 and the engaging concave section 27 have the same shape and the same size.

According to the second engaging section 22B and the second engagement section 21B mentioned above, the columnar section 24 of the second engaging section 22B is inserted into the through hole 26 of the second engagement section 21B. For this reason, it is possible to control the relative movement between the resin plate section 11 and the support section 12 in the radial direction by the contact between the columnar section 24 and the inner circumferential surface of the through hole 26.

Furthermore, the second engaging sections 22B and the second engagement sections 21B are respectively provided in plural numbers. For this reason, the plurality of columnar sections 24 and the inner circumferential surfaces of the through holes 26 come into contact with one another, and thus it is possible to control the relative movement between the resin plate section 11 and the support section 12 in the circumferential direction.

Furthermore, the engaging convex section 28 of the second engaging section 22B is disposed in the engaging concave section 27 of the second engagement section 21B. For this reason, it is possible to control the relative movement between the resin plate section 11 and the support section 12 in the axial line O direction by the contact between the engaging convex section 28 and the inner surface of the engaging concave section 27.

Both the first engaging section 22A and the second engaging section 22B are made of the same resin material as the resin plate section 11, and are integrally provided in the resin plate section 11. A connected body 29 of both of the engaging sections 22A and 22B and the resin plate section 11 is integrally molded by injection molding. In the present embodiment, the connected body 29 is integrally molded by insert molding in which the resin material is injected into a metal mold to mold the connected body 29, in the state in which the support section 12 is disposed in the metal mold (not shown). Moreover, by molding the connected body 29 through the insert molding, a portion in the connected body 29 coming into contact with the support section 12 comes into close contact with the support section 12 over approximately the entire surface.

As described above, according to the air spring apparatus 1 related to the present embodiment, the engaging sections 22A and 22B are provided in the resin plate section 11. For this reason, the engaging sections 22A and 22B are engaged with the engagement sections 21A and 21B, respectively and thus it is possible to control relative movement of the resin plate section 11 with respect to the support section 12 in each of the axial line O direction and the radial direction. As a result, when the resin plate section 11 and the projecting section 18 of the upper surface plate 2 slide in the mutual contact state, it is possible to suppress the resin plate section 11 from being detached from the support section 12.

Furthermore, by providing the resin plate section 11 with the engaging sections 22A and 22B, the resin plate section 11 and the support section 12 can be separately formed while suppressing the detachment of the resin plate section 11 from the support section 12. Accordingly, for example, as in the present embodiment, durability of the lower surface plate 3 can be easily secured by forming the support section 12 of a metallic material or the like.

Furthermore, as the resin material for forming the resin plate section 11, for example, by adopting a material having a smaller coefficient of friction than a material for forming the support section 12, a coefficient of friction between the resin plate section 11 and the projecting section 18 of the upper surface plate 2 can be effectively reduced.

Additionally, the engaging sections 22A and 22B are integrally provided on the resin plate section 11 and formed of the same resin material as the resin plate section 11. For this reason, it is possible to integrally mold the connected body 29 of the engaging sections 22A and 22B and the resin plate section 11 through the injection molding or the like as in the present embodiment, and thus the connected body 29 can be easily formed.

Furthermore, the connected body 29 can be integrally molded by the injection molding. For this reason, it is possible to engage the engaging sections 22A and 22B with the engagement sections 21A and 21B while forming the connected body 29 by adopting the insert molding or the like, as in the present embodiment, when molding the connected body 29. As a result, the manufacturing work of the air spring apparatus 1 can be simplified.

Additionally, when the connected body 29 is molded by the insert molding as in the present embodiment, the connected body 29 can be brought into close contact with the support section 12, and thus it is possible to effectively suppress the resin plate section 11 from being detached from the support section 12.

Furthermore, the cylindrical section 23 of the first engaging section 22A extends downward from the outer circumferential edge of the resin plate section 11. For this reason, as described above, the relative movement between the resin plate section 11 and the support section 12 in the axial line O direction can be controlled by the contact between the protrusion section 25 of the first engaging section 22A and the inner surface of the first engagement section 21A. As a result, it is possible to suppress an outer circumferential side portion including the outer circumferential edge in the resin plate section 11 from bending upward.

In addition, by repeating sliding in the state in which the resin plate section 11 and the projecting section 18 of the upper surface plate 2 come into contact with each other, the outer circumferential side portion of the resin plate section 11 easily bends backward. For this reason, the above-mentioned effects can be more greatly achieved.

In addition, the technical scope of the present invention is not limited to the above-mentioned embodiment, but various modifications can be added within the scope that does not depart from the gist of the present invention.

For example, in the above-mentioned embodiment, although two types of the first engaging section 22A and the first engagement section 21A, and the second engaging section 22B and the second engagement section 21B are included as the engaging sections 22A and 22B and the engagement sections 21A and 21B, any one kind thereof may be included, without being limited thereto.

Furthermore, the engaging sections 22A and 22B and the engagement sections 21A and 21B are not limited to the configuration shown in the above-mentioned embodiment, and as long as an engaging section is adopted that is provided in the resin plate section and controls relative movement of the resin plate section with respect to the support section in each of the axial line direction and the radial direction by being engaged with the engagement section that is provided in the support section, the configuration thereof can be suitably modified.

Furthermore, in the above-mentioned embodiment, although the connected body 29 is molded by the insert molding, the embodiment is not limited thereto. For example, the connected body 29 and the support section 12 may be separately formed and then assembled.
Furthermore, in the above-mentioned embodiment, although the engaging sections 22A and 22B are provided integrally with the resin plate section 11 and formed of the same material as the resin plate section 11, the embodiment is not limited thereto. For example, the resin plate section 11 and the engaging sections 22A and 22B may be formed of different resin materials by molding the connected body 29 through two-color molding.

Furthermore, in the above-mentioned embodiment, although the resin plate section 11 is provided on the lower surface plate 3 side, the resin plate section 11 may be provided on the upper surface plate 2 side and may be provided on both sides. For example, when the resin plate section 11 is provided on the upper surface plate 2 side, a configuration may be provided in which the resin plate section is supported from the upper side (the outer side of the diaphragm in the axial line direction) by the projecting section (support section) of the upper surface plate, and an engagement section that is engaged with the engaging section is provided in the projecting section.

Additionally, the upper surface plate 2 adopted as the upper member and the lower surface plate 3 adopted as the lower member are not limited to those shown in the above-mentioned embodiment.

That is, a configuration may be adopted in which contact sections slidably coming into contact with each other in the exhaust state in which the interior of the diaphragm is exhausted are provided in each of the upper member and the lower member, and at least one of the upper member and the lower member has the contact section formed of the resin material, and includes a support section that supports the contact section from the exterior of the diaphragm in the axial line direction, and an engaging section that is provided in the contact section and controls relative movement of the contact section with respect to the support section in each of the axial line direction and the radial direction by being engaged with the engagement section that is provided in the support section.

Furthermore, in the above-mentioned embodiment, although the auxiliary elastic body 6 is constituted by the laminated rubber, the auxiliary elastic body 6 may be suitably modified by other configurations in which a spring constant in each of the axial line O direction and the radial direction is higher than that of the diaphragm 5 filled with a gas. For example, a configuration may be adopted that includes a lower board, an upper board, and a cylindrical elastic member disposed between the boards and affixed to both boards by vulcanization.

Moreover, the auxiliary elastic body 6 may be excluded. In this case, the lower surface plate 3 may include a configuration that corresponds to the upper board 8 of the auxiliary elastic body 6.

In addition, the components in the above-mentioned embodiment can be suitably replaced with well-known components within the scope that does not depart from the gist of the present invention, and the modified examples may be suitably combined.

### [Industrial Applicability]

According to the air spring apparatus related to the present invention, it is possible to suppress the contact section from being detached from the support section.

### [Reference Signs List]

1 air spring apparatus
2 upper surface plate
3 lower surface plate
4 cylindrical membrane member
4a, 4b open end section
5 diaphragm
11 resin plate section (contact section)
12 support section
18 projecting section (contact section)
21A, 21B engagement section
22A, 22B engaging section
23 cylindrical section
25 protrusion section

## Claims

1. An air spring apparatus (1) comprising:
a diaphragm (5) that has an upper member (2), a lower member (3), and a cylindrical membrane member (4) having both open end sections connected to both the upper and lower members (2, 3) and sealed with the upper and lower members (2, 3), the upper member (2) and the lower member (3) being provided with contact sections (11, 18) that slidably come into contact with each other in an exhaust state in which the interior of the diaphragm (5) is exhausted,
**characterised in that** at least one of the upper member (2) and the lower member (3) having the contact sections (11, 18), which are formed of a resin material, comprises:
a support section (12) that supports the contact section (11) from the exterior of the diaphragm (5) disposed in an axial line direction (O); and
an engaging section (22A, 22B) that is provided in the contact section (11) and controls respective relative movements of the contact section (11) with respect to the support section (12) in the axial line direction (O) and a radial direction by being engaged with an engagement section (21A, 21B) that is provided in the support section (12).

2. The air spring apparatus (1) according to claim 1,
wherein the engaging section (22A, 22B) is integrally formed with the contact section (11) formed of the same resin material as the contact section provided with the engaging section (22A, 22B).

3. The air spring apparatus (1) according to claim 1 or 2,
wherein the engaging section (22A) and the engagement section (21A) comprise a first engaging section (22A) and a first engagement section (21A) engaged with the first engaging section (22A),
wherein the first engagement section (21A) is formed on an outer circumferential surface of the support section (12) in a groove shape, and
the first engaging section (22A) comprises a cylindrical section (23) that extends toward the exterior of the diaphragm (5) disposed in the axial line direction (O) from an outer circumferential edge of the contact section and is externally fitted to the support section (12),
and
a protrusion section (25) that protrudes on an inner circumferential surface of the cylindrical section (23) and is disposed in the first engagement section (21A).

4. The air spring apparatus (1) according to any one of claims 1 to 3,
wherein the engaging section (22B) and the engagement section (21B) comprise a second engaging section (22B) and a second engagement section (21B) engaged with the second engaging section (22B),
wherein the second engagement section (21B) comprises a through hole (26) that penetrates the support section (12) in the axial line (O) direction, and
wherein the second engaging section (22B) comprises a columnar section (24) that extends in the axial line direction (O) from the contact section (11) and is inserted into the through hole (26).

5. The air spring apparatus (1) according to claim 4,
the second engagement section (21B) comprises an engaging concave section (27) that is formed on an inner circumferential surface of the through hole (26), and
the columnar section (24) is provided with an engaging convex section (28) that is disposed in the engaging concave section (27) of the second engagement section (21B).

## Patentansprüche

1. Luftfedervorrichtung (1), die Folgendes umfasst:
eine Membran (5), die ein oberes Element (2), ein unteres Element (3) und ein zylindrisches Membranelement (4), das zwei offene Endsektionen aufweist, die mit sowohl dem oberen als auch dem unteren Element (2, 3) verbunden und mit dem oberen und dem unteren Element (2, 3) abgedichtet sind, aufweist, wobei das obere Element (2) und das untere Element (3) mit Kontaktsektionen (11, 18) versehen sind, die in einem Entleerungszustand, in dem das Innere der Membran (5) entleert ist, verschiebbar in Kontakt miteinander kommen,
**dadurch gekennzeichnet, dass** wenigstens eines von dem oberen Element (2) und dem unteren Element (3), das die Kontaktsektionen (11, 18) aufweist, die aus einem Harzwerkstoff geformt sind, Folgendes umfasst:
eine Stützsektion (12), welche die Kontaktsektion (11) von dem Äußeren der Membran (5) stützt, die in einer Axiallinienrichtung (O) angeordnet ist; und
eine Eingriffssektion (22A, 22B), die in der Kontaktsektion (11) bereitgestellt wird und jeweilige relative Bewegungen der Kontaktsektion (11) in Bezug auf die Stützsektion (12) in der Axiallinienrichtung (O) und einer radialen Richtung dadurch steuert, dass sie mit einer Eingriffssektion (21A, 21B) in Eingriff gebracht wird, die in der Stützsektion (12) bereitgestellt wird.

2. Luftfedervorrichtung (1) nach Anspruch 1,
wobei die Eingriffssektion (22A, 22B) integral mit der Kontaktsektion (11) geformt ist, die aus dem gleichen Harzwerkstoff geformt ist wie die Kontaktsektion, die mit der Eingriffssektion (22A, 22B) versehen ist.

3. Luftfedervorrichtung (1) nach Anspruch 1 oder 2,
wobei die Eingriffssektion (22A) und die Eingriffssektion (21A) eine erste Eingriffssektion (22A) und eine erste Eingriffssektion (21A), die mit der ersten Eingriffssektion (22A) in Eingriff gebracht ist, umfassen,
wobei die erste Eingriffssektion (21A) an einer äußeren Umfangsfläche der Stützsektion (12) in einer Rillenform geformt ist, und
wobei die erste Eingriffssektion (22A) eine zylindrische Sektion (23) umfasst, die sich zu dem Äußeren der Membran (5) hin erstreckt, die in der Axiallinienrichtung (O) von einer äußeren Umfangskante der Kontaktsektion aus angeordnet ist und außen an der Stützsektion (12) angebracht ist,
und
eine Vorsprungssektion (25), die an einer inneren Umfangsfläche der zylindrischen Sektion (23) vorspringt und in der ersten Eingriffssektion (21A) angeordnet ist.

4. Luftfedervorrichtung (1) nach einem der Ansprüche 1 bis 3,
wobei die Eingriffssektion (22B) und die Eingriffssektion (21B) eine zweite Eingriffssektion (22B) und eine zweite Eingriffssektion (21B), die mit der zweiten Eingriffssektion (22B) in Eingriff gebracht ist, umfassen,
wobei die zweite Eingriffssektion (21B) ein Durchgangsloch (26) umfasst, das die Stützsektion (12) in der Axiallinienrichtung (O) durchdringt, und
wobei die zweite Eingriffssektion (22B) eine säulenförmige Sektion (24) umfasst, die sich in der Axiallinienrichtung (O) von der Kontaktsektion (11) aus erstreckt und in das Durchgangsloch (26) eingesetzt ist.

5. Luftfedervorrichtung (1) nach Anspruch 4,
wobei die zweite Eingriffssektion (21B) eine eingreifende konkave Sektion (27) umfasst, die an einer inneren Umfangsfläche des Durchgangslochs (26) geformt ist, und
wobei die säulenförmige Sektion (24) mit einer eingreifenden konvexen Sektion (28) versehen ist, die in der eingreifenden konkaven Sektion (27) der zweiten Eingriffssektion (21B) angeordnet ist.

## Revendications

1. Appareil à ressort pneumatique (1), comprenant :
un diaphragme (5) comportant un élément supérieur (2), un élément inférieur (3) et un élément de membrane cylindrique (4) dont les deux sections d'extrémité ouvertes sont connectées aux éléments supérieur et inférieur (2, 3), et scellé avec les éléments supérieur et inférieur (2, 3), l'élément supérieur (2) et l'élément inférieur (3) comportant des sections de contact (11, 18) entrant en contact de manière coulissante l'une avec l'autre dans un état évacué dans lequel l'intérieur du diaphragme (5) est évacué ;
**caractérisé en ce qu'**au moins l'un des éléments supérieur (2) et inférieur (3), comportant les sections de contact (11, 18) composées d'un matériau de résine, comprend :
une section de support (12) supportant la section de contact (11) à partir de l'extérieur du diaphragme (5), disposée dans une direction de la ligne axiale (O) ; et
une section d'engagement (22A, 22B) agencée dans la section de contact (11) et contrôlant les déplacements relatifs respectifs de la section de contact (11) par rapport à la section de support (12), dans la direction de la ligne axiale (O) et dans une direction radiale, par suite d'un engagement dans une section d'engagement (21A, 21B) agencée dans la section de support (12).

2. Appareil à ressort pneumatique (1) selon la revendication 1,
dans lequel la section d'engagement (22A, 22B) est formée d'une seule pièce avec la section de contact (11) composée du même matériau de résine que la section de contact, agencée ensemble avec la section d'engagement (22A, 22B).

3. Appareil à ressort pneumatique (1) selon les revendications 1 ou 2,
dans lequel la section d'engagement (22A) et la section d'engagement (21A) comprennent une première section d'engagement (22A) et une première section d'engagement (21A) engagée dans la première section d'engagement (22A),
dans lequel la première section d'engagement (21A) est formée sur une surface circonférentielle externe de la section de support (12) en forme de rainure , et
dans lequel la première section d'engagement (22A) comprend une section cylindrique (23) s'étendant vers l'extérieur du diaphragme (5) disposée dans la direction de la ligne axiale (O) à partir d'un bord circonférentiel externe de la section de contact, et est ajustée de l'extérieur sur la section de support (12),
et
une section en saillie (25) faisant saillie sur une surface circonférentielle interne de la section cylindrique (23) et disposée dans la première section d'engagement (21A).

4. Appareil à ressort pneumatique (1) selon l'une quelconque des revendications 1 à 3,
dans lequel la section d'engagement (22B) et la section d'engagement (21B) comprennent une deuxième section d'engagement (22B) et une deuxième section d'engagement (21B) engagée dans la deuxième section d'engagement (22B),
dans lequel la deuxième section d'engagement (21B) comprend un trou de passage (26) pénétrant dans la section de support (12) dans la direction de la ligne axiale (O), et
dans lequel la deuxième section d'engagement (22B) comprend une section en colonne (24) s'étendant dans la direction de la ligne axiale (O) à partir de la section de contact (11) et est insérée dans le trou de passage (26).

5. Appareil à ressort pneumatique (1) selon la revendication 4,
dans lequel la deuxième section d'engagement (21B) comprend une section d'engagement concave (27) formée sur une surface circonférentielle interne du trou de passage, et
dans lequel la section en colonne (24) comporte une section d'engagement convexe (28) disposée dans la section d'engagement concave (27) de la deuxième section d'engagement (21B).
